# NEUE EUROPÄISCHE PATENTSCHRIFT

(11) **EP 1 922 235 B2**
(45) Veröffentlichungstag und Bekanntmachung des Hinweises auf die Entscheidung über den Einspruch: **04.03.2020**
(45) Hinweis auf die Patenterteilung: 01.03.2017
(21) Anmeldenummer: 06791654.4
(22) Anmeldetag: 25.08.2006
(51) Int. Cl.: B60G 17/0185, B61K 9/08, B60G 17/052

(54) **VERFAHREN UND VORRICHTUNG ZUR DETEKTION VON STÖRUNGEN IN FAHRWERKEN VON DURCH LUFTFEDEREINRICHTUNGEN GEFEDERTEN FAHRZEUGEN**
METHOD AND DEVICE FOR DETECTING MALFUNCTIONS IN THE RUNNING GEAR OF VEHICLES WITH PNEUMATIC SUSPENSIONS
PROCEDE ET DISPOSITIF POUR DETECTER DES PERTURBATIONS DANS DES CHASSIS DE VEHICULES A DISPOSITIFS DE SUSPENSION PNEUMATIQUE

(30) Priorität: 26.08.2005 DE 102005040504
(43) Veröffentlichungstag der Anmeldung: 21.05.2008
(73) Patentinhaber: KNORR-BREMSE Systeme für Schienenfahrzeuge GmbH, 80809 München (DE)
(72) Erfinder: FRIESEN, Ulf, 85579 Neubiberg (DE); WALDMANN, Peter, 80995 München (DE)
(74) Vertreter: Wiedemann, Markus
(86) Internationale Anmeldenummer: PCT/EP2006/008341
(87) Internationale Veröffentlichungsnummer: WO 2007/022989

(56) Entgegenhaltungen:
- EP-A2- 0 170 794
- WO-A-2004/022406
- DD-A- 398 948
- DE-A1- 10 236 246
- DE-A1- 10 301 119
- DE-A1- 19 522 993
- GB-A- 2 344 323
- US-A1- 2005 204 951

## Beschreibung

### Stand der Technik

Die Erfindung betrifft ein Verfahren zur Detektion von Störungen und Fehlern in Fahrwerken oder Drehgestellen von durch Luftfedereinrichtungen gefederten Schienenfahrzeugen sowie eine Vorrichtung zur Ausführung des Verfahrens gemäß den Ansprüche 1 und 6.

Luftfedereinrichtungen in Schienenfahrzeugen haben die Aufgabe, eine Übertragung von Körperschall vom Fahrwerk auf den Wagenaufbau oder Wagenkasten zu dämpfen. Gleichzeitig dienen die Luftfederbälge zur Niveauregulierung des Wagenkastens bei unterschiedlicher Beladung.

Aus DE 103 53 416 A1 ist eine elektronisch geregelte Luftfedereinrichtung eines Schienenfahrzeugs bekannt, mit mehreren Luftfederbälgen, welche über von einem zentralen Steuergerät ansteuerbare Steuerventile be- und entlüftbar sind, sowie mit je einem Drucksensor und Wegsensor je Luftfederbalg zur Erfassung von Höhenänderungen zwischen Drehgestell und dem Wagenaufbau. Bei Abweichungen vom gewünschten Wert werden die Luftfederbälge gezielt so be- oder entlüftet, das sich das gewünschte Niveau des Wagenaufbaus wieder einstellt.

Ebenso beschreibt die GB 2 344 323 A eine Luftfedereinrichtung eines Schienenfahrzeugs, mit mehreren Luftfederbälgen, welche über von einem zentralen Steuergerät ansteuerbare Steuerventile be- und entlüftbar sind, sowie mit je einem Drucksensor und Wegsensor je Luftfederbalg zur Erfassung von Höhenänderungen zwischen Drehgestell und dem Wagenaufbau. Einige Steuerventile der Luftfederungseinrichtung werden auf ihre Funktion hin dadurch überprüft, dass der Luftdruck in den Luftfederbälgen nach Öffnen bzw. Schließen dieser Ventile erfasst und mit einem erwarteten Luftdruck verglichen wird. Weiterhin werden die Drucksignale von Drucksensoren in den Luftfederbälgen der Luftfederung herangezogen, um Rückschlüsse auf die Last zu ziehen.

Im Schienenfahrzeugbereich besteht Nachfrage nach Überwachungssystemen für Fahrwerke. Von besonderem Interesse ist dabei eine Erfassung von Entgleisungen, unrunden Rädern, Flachstellen und Schäden an Fahrwerksteilen, welche kritische Fahrzustände auslösen können.

Bekannte Überwachungs- und Diagnosesysteme erfordern jedoch den Einbau zusätzlicher Sensoren und deren Verkabelungen. Ein solches Überwachungs- und Diagnosesystem mit zusätzlichen Sensoren ist aus der WO 2004/022406 A1 bekannt. Diese Schrift beschreibt ein Verfahren und eine Vorrichtung zur Zustandsüberwachung von Fahrwerken von Schienenfahrzeugen, bei welchem Größen am Fahrwerk durch eigens dafür vorgesehene Sensoren wie Vibrationssensoren oder Kraftsensoren gemessen und überwacht werden.

Die DE 100 62 606 A1 schlägt ein Verfahren bzw. eine Vorrichtung zur Detektion von Störungen, Fehlern oder kritischen Zuständen in Fahrwerken von Schienenfahrzeugen vor, bei welchem eine ohnehin gemessene elektrische Messgröße eines antreibenden Elektromotors des Schienenfahrzeugs wie Spannung oder Strom herangezogen wird, um einen Rückschluss auf den mechanischen Verschleiß der Fahrwerksmechanik ziehen zu können. Dahinter steckt die Überlegung, dass verschleißbedingte Änderungen an Fahrwerkskomponenten zu Modulationen im Drehmoment des das Fahrzeug antreibenden elektrischen Antriebs führen. Nachteilig dabei ist jedoch, dass der Übertragungsweg zwischen dem Fahrwerk und dem elektrischen Antriebsmotor eines Schienenfahrzeugs den gesamten Antriebsstrang umfasst. Aus diesem Grunde ist nicht auszuschließen, dass verschleißbedingte Änderungen im Antriebsstrang irrtümlich als Fahrwerksverschleiß interpretiert werden. Weiterhin ist eine Fehlerdiagnose an einem Fahrwerk mit nicht angetriebenen, aber unzulässig verschlissenen Achsen schwierig, wenn beispielsweise der Verbrauchsstrom an einer angetriebenen Achse als Fehlerindikator herangezogen wird.

Der Erfindung liegt demgegenüber die Aufgabe zugrunde, ein aus dem genannten Stand der Technik bekanntes Verfahren so fortzubilden, dass es eine genauere Detektion von Störungen und Fehlern bei Fahrwerken von Schienenfahrzeugen erlaubt, insbesondere an Fahrwerken von nicht angetriebenen Achsen.

Diese Aufgabe wird durch die Merkmale von Anspruch 1 gelöst.

### Offenbarung der Erfindung

Das erfindungsgemäße Verfahren basiert auf einer ständigen oder zeitweisen Überwachung wenigstens einer im Rahmen der Luftfederungseinrichtung oder einer Bremseinrichtung des Fahrzeugs ohnehin erfassten und sich durch eine Störung oder einen Fehler im Fahrwerk oder Drehgestell ändernden physikalischen Größe. Hierzu zählen beispielsweise der Druck in einem Luftfederbalg und/oder ein lastproportionaler Steuerdruck für eine lastabhängige Bremskraftregelung und/oder der Abstand zwischen dem Fahrwerk und dem Fahrzeugchassis. Da wenigstens eine dieser Größen im Rahmen der Funktion der Luftfederungseinrichtung oder der Bremseinrichtung des Fahrzeugs ohnehin durch entsprechende Sensoren gemessen werden, benötigt das Überwachungsverfahren keine weiteren Sensoren oder zusätzliche Verkabelungen. Hierdurch sind das Verfahren und die zu seiner Ausführung vorgesehene Vorrichtung äußerst kostengünstig realisierbar.

Bei einer gebräuchlichen Luftfederungseinrichtung sind mechanisch betätigte Regelventile für jeden einzelnen Luftfederbalg bzw. für Gruppen von Luftfederbälgen vorhanden. Diese Regelventile tasten über ein Gestänge mit Umlenkmechanik die Höhenänderungen zwischen Drehgestell und Wagenkasten. Zusätzlich kann im Rahmen einer sog. Lastabbremsung, mit welcher eine Anpassung der Bremskraft an das Fahrzeuggewicht entsprechend seines Beladungszustandes erzielt wird, eine Regelung der Bremskraft durch einen lastabhängigen Steuerdruck erfolgen, der beispielsweise von dem in den Luftfederbälgen herrschenden Luftdruck abgeleitet wird. Dieser im Rahmen der Bremseinrichtung des Fahrzeugs ohnehin erzeugte Steuerdruck ändert sich in charakteristischer Weise, wenn eine Störung oder ein Fehler im Fahrwerk vorliegt.

Alternativ können auch die Weg- und/oder Drucksignale der ohnehin vorhandenen Weg- und Drucksensoren einer elektronisch geregelten Luftfederungseinrichtung wie sie beispielsweise in der eingangs diskutierten DE 103 53 416 A1 beschrieben ist, genutzt werden, um Störungen und Fehler im Fahrwerk zu detektieren.

Eine Plausibilitätsprüfung der Ergebnisse erfolgt vorzugsweise durch Bilden einer Korrelation zwischen den Drucksignalen wie Luftfederbalgdruck und/oder lastproportionaler Steuerdruck einerseits und den Wegsignalen andererseits. Darüber hinaus ist durch die beiden unterschiedlichen Signale auch eine redundante, aber diversitäre Auswertung möglich.

Eine Auswertung der Sensorsignale kann beispielsweise durch Beobachtung erfolgen, ob die wenigstens eine überwachte physikalische Größe einen Schwellwert über- oder unterschreitet. Denkbar ist auch eine statistische Auswertung und/oder eine Frequenzanalyse der wenigstens einen überwachten physikalischen Größe, bevorzugt durch eine Fast-Fourrier-Transformation. Dadurch lassen sich Frequenzen von Schwingungen analysieren, welche von Fahrwerksfehlern und -störungen herrühren.

Für eine Entgleisungsdetektion eignet sich beispielsweise eine Auswertung der Dynamik der lastproportionalen Steuerdrücke oder der Drücke in den Luftfederbälgen, welche sich im entgleisten Zustand aufgrund des dann stark veränderten Rad-Untergrund-Laufverhaltens wesentlich ändern. Die Erkennung von Flachstellen und Unrundheiten der Räder wird bevorzugt durch eine Auswertung des zeitlichen Verlaufs der von den Wegsensoren gelieferten Wegsignale bewerkstelligt.

Eine zur Ausführung des erfindungsgemäßen Verfahrens vorgesehene Vorrichtung ist durch eine in ein Luftfederungssteuergerät oder in ein Bremssteuergerät integrierte Auswerteeinheit gekennzeichnet. In diesem Fall wird keine zusätzliche Hardware benötigt, weil bereits vorhandene Steuergeräte genutzt werden und die Überwachungsfunktion lediglich als zusätzliche Software installiert wird. Die Integration der Auswerteeinheit in die Steuerung der Luftfedereinrichtung oder in das Bremssteuergerät, dort bevorzugt in die Gleitschutz- oder Bremssteuerelektronik bietet die Möglichkeit, Systemkomponenten wie Stromversorgung, Schnittstellen zu Bedienpersonen und zu einem Fahrzeugleitsystem gemeinsam zu nutzen. Dies reduziert den gerätetechnischen Aufwand. Bei Verwendung einer entsprechend leistungsfähigen Rechnereinheit ist eine parallele Verarbeitung der Signale der Bremseinrichtung wie auch der Überwachungsvorrichtung möglich. Nicht zuletzt stehen der Auswerteeinheit sämtliche Signale des Bremsteuergeräts und der Gleitschutzeinrichtung zur Verfügung, wie beispielsweise Geschwindigkeitssignale. Folglich eignet sich das erfindungsgemäße System besonders zur Nachrüstung bereits vorhandener Fahrzeuge.

Die Auswerteeinheit kann weiterhin wenigstens eine Schnittstelle zur Kommunikation mit einem Fahrzeugleitsystem aufweisen, insbesondere zur Meldung kritischer Zustände. Darüber hinaus können über die Schnittstelle Daten von anderen Systemen eingelesen werden, welche für die Überwachungsfunktion relevant sind. Nicht zuletzt kann die Auswerteeinheit auch mit einer Schnittstelle zur Bedienung durch eine Bedienperson ausgestattet sein.

### Zeichnungen

Ausführungsbeispiele der Erfindung sind in der Zeichnung dargestellt und in der nachfolgenden Beschreibung näher erläutert. In der Zeichnung zeigt
- Fig.1: eine schematische Darstellung einer Luftfedereinrichtung mit mechanisch betätigtem Regelventil, welche mit einer Vorrichtung zur Detektion von Störungen oder Fehlern im Fahrwerk gemäß einer bevorzugten Ausführungsform der Erfindung zusammenwirken;
- Fig.2: eine schematische Darstellung einer Luftfedereinrichtung mit mechanisch-pneumatischer 4-Punktregelung, welche mit einer Vorrichtung zur Detektion von Störungen oder Fehlern im Fahrwerk gemäß einer weiteren Ausführungsform der Erfindung zusammenwirken;
- Fig.3: eine schematische Darstellung einer Luftfedereinrichtung mit elektronischer 4-Punktregelung, welche mit einer Vorrichtung zur Detektion von Störungen oder Fehlern im Fahrwerk gemäß einer weiteren Ausführungsform der Erfindung zusammenwirken.

### Beschreibung des Ausführungsbeispiels

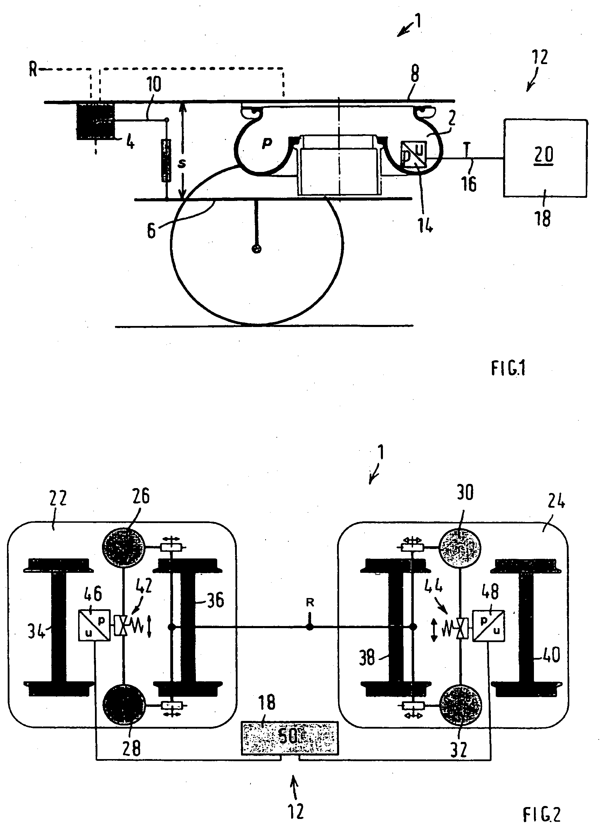

Bei der in Fig.1 gezeigten Luftfedereinrichtung 1 eines Schienenfahrzeugs ist für jeden einzelnen Luftfederbalg 2 bzw. für Gruppen von Luftfederbälgen ein mechanisch betätigtes, unter Vorratsdruck stehendes Regelventil 4 vorhanden. Die Luftfederbälge 2 sind dem Fahrwerk 6 und dem Wagenkasten 8 zwischengeordnet, so dass sich je nach Belüftungszustand der Luftfederbälge 2 das Niveau des Wagenkastens 8 ändert. Die Regelventilventile 4 tasten über ein Gestänge 10 mit Umlenkmechanik den Abstand s zwischen dem Fahrwerk 6 oder Drehgestell und dem Wagenkasten 8 ab. Bei Abweichungen vom gewünschten Wert werden die Luftfederbälge 2 durch die Regelventile 4 gezielt so be- oder entlüftet, das sich das gewünschte Niveau des Wagenkastens 8 wieder einstellt.

Das Schienenfahrzeug umfasst eine Überwachungsvorrichtung 12 zur Detektion von Störungen oder Fehlern im Fahrwerk 6, welche darauf basiert, dass ständig oder zeitweise wenigstens eine im Rahmen der Luftfederungseinrichtung 1 oder der Bremseinrichtung ohnehin erfasste und sich durch eine Störung oder einen Fehler im Fahrwerk 6 ändernde physikalischen Größe erfasst wird.

Im vorliegenden Fall erfolgt im Rahmen einer sog. Lastabbremsung, mit welcher eine Anpassung der Bremskraft an das Fahrzeuggewicht entsprechend seines Beladungszustandes erzielt wird, eine Regelung der Bremskraft durch einen lastabhängigen Steuerdruck T, der beispielsweise von dem in den Luftfederbälgen 2 herrschenden Luftdruck p abgeleitet wird. Dieser im Rahmen der Bremseinrichtung ohnehin erzeugte Steuerdruck T ändert sich in charakteristischer Weise, wenn eine Störung oder ein Fehler im Fahrwerk 6 vorliegt. Zur Messung des lastabhängigen Steuerdrucks T ist beispielsweise ein Drucksensor 14 vorgesehen, welcher über eine elektrische Leitung 16 ein entsprechendes Drucksignal an eine Auswerteeinheit 18 der Überwachungsvorrichtung 12 liefert. Diese Auswerteeinheit 18 ist im vorliegenden Fall in ein Bremssteuergerät 20 des Schienenfahrzeugs integriert. Alternativ könnte die Auswerteeinheit 18 auch als stand-alone-Einheit aufgebaut sein.

Eine Auswertung der Drucksensorsignale kann beispielsweise durch Beobachtung erfolgen, ob der lastabhängige Steuerdruck T einen Schwellwert überschreitet. Des weiteren kann auch eine statistische Auswertung und/oder eine Frequenzanalyse der Drucksignale erfolgen. Dadurch lassen sich Frequenzen von Schwingungen analysieren, welche von Fahrwerksfehlern und -störungen herrühren. Für eine Entgleisungsdetektion eignet sich beispielsweise eine Auswertung der Dynamik der lastproportionalen Steuerdrücke T oder der Drücke p in den Luftfederbälgen 2, welche sich im entgleisten Zustand aufgrund des dann stark veränderten Rad-Untergrund-Laufverhaltens wesentlich ändern.

Die Auswerteeinheit 18 kann weiterhin wenigstens eine Schnittstelle zur Kommunikation mit einem Fahrzeugleitsystem aufweisen, insbesondere zur Meldung kritischer Zustände. Darüber hinaus können über die Schnittstelle Daten von anderen Systemen eingelesen werden, welche für die Überwachungsfunktion relevant sind. Nicht zuletzt kann die Auswerteeinheit 18 auch mit einer Schnittstelle zur Bedienung durch eine Bedienperson ausgestattet sein.

Gemäß einer weiteren, in Fig.2 gezeigten Ausführungsform der Luftfedereinrichtung 1 ist eine mechanisch-pneumatische 4-Punkt-Regelung realisiert. Vorzugsweise sind je Drehgestell 22, 24 zwei Federbälge 26, 28 und 30, 32, jeweils rechtsseitig und linksseitig vorhanden, welche den beiden Radsätzen 34, 36 und 38, 40 je Drehgestell 22, 24 zwischengeordnet und über je ein Doppelüberströmventil mit Mitteldruckbildung 42, 44 in druckleitender Verbindung stehen, um aus Sicherheitsgründen größere Druckdifferenzen in den Luftfederbälgen 26, 28 und 30, 32 zu vermeiden. Bevorzugt in den Doppelüberströmventilen mit Mitteldruckbildung 42, 44 ist je ein Drucksensor 46, 48 integriert, welcher den Mitteldruck misst und der Auswerteeinheit 18 der Überwachungsvorrichtung 12 als beladungsproportionales Signal liefert, welche wiederum in das Bremssteuergerät 50 integriert ist.

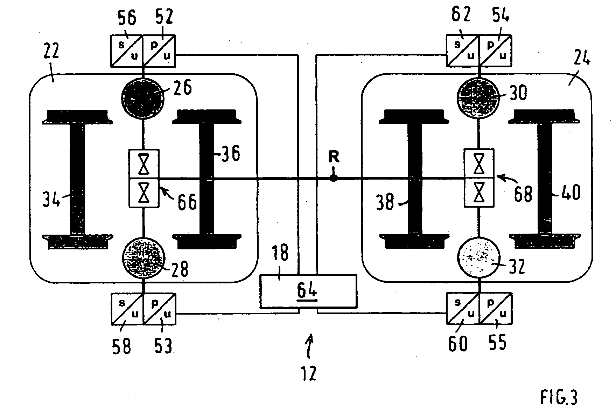

In Fig.3 ist eine Luftfedereinrichtung 1 mit elektronischer 4-Punkt-Regelung gezeigt. Vorzugsweise sind wiederum je Drehgestell 22, 24 zwei Luftfederbälge 26, 28 und 30, 32 vorhanden, welche über je einen Ventilblock mit Be- und Entlüftungsventilen 66, 68, die durch eine elektronische Regeleinheit angesteuert werden, in Verbindung stehen. Hierbei ist jedem Luftfederbalg 26, 28 und 30, 32 je ein Drucksensor 52, 53, 54, 55 zur Messung des Drucks im jeweiligen Luftfederbalg 26, 28 und 30, 32 und je ein Wegsensor 56, 58, 60, 62 zur Messung des Abstands s des Fahrwerks vom Wagenkasten zugeordnet. Diese Sensoren 52, 53, 54, 55 und 56, 58, 60, 62 liefern entsprechende Wegsignale und Drucksignale an die Auswerteeinheit 18, die in ein Gleitschutzsteuergerät 64 einer Gleitschutzeinrichtung integriert ist, welche beim Bremsen das Blockieren der Radsätze 34, 36, 38 und 40 verhindern soll. Bei der vorliegenden Ausführung als Mikroprozessor-Gleitschutz wird der Schlupf der Radsätze 34, 36, 38, 40 bei ungenügendem Kraftschlusswert zwischen Rad und Schiene geregelt. Dazu werden die Geschwindigkeiten aller Räder des Schienenfahrzeugs über Drehzahlgeber erfasst. Hieraus berechnet der Mikroprozessor die tatsächliche Zuggeschwindigkeit und reduziert den durch die Bremssteuerung vorgegebenen Bremszylinderdruck mittels elektropneumatischer Gleitschutzventile achs- oder drehgestellweise.

Die Erkennung von Flachstellen und Unrundheiten der Räder wird bevorzugt durch eine Auswertung des zeitlichen Verlaufs des von den Wegsensoren 56, 58, 60, 62 gelieferten Wegsignals bewerkstelligt. Durch die bei dieser Ausführungsform größere Anzahl von Sensoren im Fahrwerk und die direkte Ankoppelung dieser an die Luftfederbälge 26, 28 und 30, 32 ist eine genauere Detektion von fehlerhaften Zuständen als bei der Auswertung der Mitteldrucksignale bei der vorangehend beschriebenen Ausführungsform möglich. Eine Plausibilitätsprüfung der Auswertung erfolgt vorzugsweise durch Bilden einer Korrelation zwischen den Drucksignalen einerseits und den Wegsignalen andererseits.

### Bezugszahlentiste

- 1: Luftfedereinrichtung
- 2: Luftfederbalg
- 4: Regelventil
- 6: Fahrwerk
- 8: Wagenkasten
- 10: Gestänge
- 12: Überwachungsvorrichtung
- 14: Drucksensor
- 16: elektr. Leitung
- 18: Auswerteeinheit
- 20: Bremssteuergerät
- 22: Drehgestell
- 24: Drehgestell
- 26: Federbalg
- 28: Federbalg
- 30: Federbalg
- 32: Federbalg
- 34: Radsatz
- 36: Radsatz
- 38: Radsatz
- 40: Radsatz
- 42: Doppelüberströmventil mit Mitteldruckbildung
- 44: Doppelüberströmventil mit Mitteldruckbildung
- 46: Drucksensor
- 48: Drucksensor
- 50: Bremssteuergerät
- 52: Drucksensor
- 53: Drucksensor
- 54: Drucksensor
- 55: Drucksensor
- 56: Wegsensor
- 58: Wegsensor
- 60: Wegsensor
- 62: Wegsensor
- 64: Gleitschutzsteuergerät
- 66: Ventilblock
- 68: Ventilblock

## Patentansprüche

1. Verfahren zur Detektion von Störungen und Fehlern in Fahrwerken (6) oder Drehgestellen von durch Luftfedereinrichtungen (1) gefederten Schienenfahrzeugen, wobei Luftfederbälge (2) der Luftfederungseinrichtung (1) dem Fahrwerk (6) oder Drehgestell und einem Wagenkasten (8) zwischengeordnet sind, wobei das Verfahren zur Detektion von Störungen und Fehlern in den Fahrwerken (6) oder in den Drehgestellen eine ständige oder zeitweise Überwachung wenigstens einer im Rahmen der Luftfederungseinrichtung (1) oder einer Bremseinrichtung des Fahrzeugs ohnehin erfassten und sich durch eine Störung oder einen Fehler im Fahrwerk (6) oder Drehgestell ändernden physikalischen Größe (T, p, s) beinhaltet.

2. Verfahren nach Anspruch 1, **dadurch gekennzeichnet, dass** die wenigstens eine physikalische Größe den Druck (p) in einem Luftfederbalg (2; 26, 28, 30, 32) und/oder einen lastproportionalen Steuerdruck (T) für eine lastabhängige Bremskraftregelung und/oder den Abstand (s) zwischen dem Fahrwerk (6) und einem Fahrzeugchassis (8) beinhaltet.

3. Verfahren nach Anspruch 2, **gekennzeichnet durch** Bilden einer Korrelation zwischen dem Luftfederbalgdruck (p) und/oder dem lastproportionalen Steuerdruck (T) einerseits und dem Abstand (s) andererseits.

4. Verfahren nach wenigstens einem der vorhergehenden Ansprüche, **dadurch gekennzeichnet, dass** eine Auswertung dadurch erfolgt, ob die wenigstens eine überwachte physikalische Größe (T, p, s) einen Schwellwert über- oder unterschreitet.

5. Verfahren nach wenigstens einem der vorhergehenden Ansprüche, **gekennzeichnet durch** eine statistische Auswertung und/oder eine Frequenzanalyse der wenigstens einen überwachten physikalischen Größe (T, p, s).

6. Vorrichtung zur Ausführung des Verfahrens nach wenigstens einem der vorhergehenden Ansprüche, **gekennzeichnet durch** eine in ein Luftfederungssteuergerät, ein Bremssteuergerät (20) oder in ein Gleitschutzsteuergerät (64) integrierte Auswerteeinheit (18), welche für eine ständige oder zeitweise Überwachung wenigstens einer im Rahmen der Luftfederungseinrichtung (1) oder einer Bremseinrichtung des Fahrzeugs ohnehin erfassten und sich durch eine Störung oder einen Fehler im Fahrwerk (6) oder Drehgestell ändernden physikalischen Größe (T, p, s) ausgebildet ist, um die Störung oder den Fehler im Fahrwerk (6) oder Drehgestell zu detektieren.

7. Vorrichtung nach Anspruch 6, **dadurch gekennzeichnet, dass** die Auswerteeinheit (18) wenigstens eine Schnittstelle zur Kommunikation mit einem Fahrzeugleitsystem aufweist.

8. Vorrichtung nach Anspruch 6 oder 7, **dadurch gekennzeichnet, dass** sie zur ständigen oder zeitweisen Überwachung der wenigstens einen sich durch eine Störung oder einen kritischen Zustand im Fahrwerk (6) ändernden physikalischen Größe (T, p, s) der Luftfedereinrichtung (1) wenigstens einen Wegsensor (56, 58, 60, 62) zur Erzeugung eines den Abstand zwischen dem Fahrwerk (6) und einem Fahrzeugchassis (8) charakterisierenden Wegsignals und/oder wenigstens einen Drucksensor (46, 48; 52, 53, 54, 55) zur Erzeugung eines den Luftfederbalgdruck (p) und/oder einen lastproportionalen Steuerdruck (T) für eine lastabhängige Bremskraftregelung charakterisierenden Signals beinhaltet.

## Claims

1. A method for detecting failures and faults in the running gear (6) or bogies of rail vehicles fitted with pneumatic suspension devices (1), air bellows (20) of the pneumatic suspension device (1) being arranged between the running gear (6) or bogie and a carriage body (8), this method for detecting failures and faults in the running gear (6) or bogies of rail vehicles entailing the constant or intermittent monitoring of at least one physical value (T, p, s) that is recorded in any event as part of the operation of the pneumatic suspension device (1) or a brake device of the vehicle and that varies in response to a failure or fault in the running gear (6) or bogie.

2. A method according to claim 1, **characterised in that** the at least one physical value includes the pressure (p) in an air bellows (2; 26, 28, 30, 32) and/or a load-proportional control pressure (T) for controlling braking force as a function of load and/or the distance (s) between the running gear (6) and a vehicle chassis (8).

3. A method according to claim 2, **characterised by** the formation of a correlation between the air bellows pressure (p) and/or the load-proportional control pressure (T) on one hand and the distance (s) on the other.

4. A method according to at least one of the preceding claims, **characterised in that** an evaluation is carried out to ascertain whether the at least one monitored physical value (T, p, s) exceeds or falls below a threshold value.

5. A method according to at least one of the preceding claims, **characterised by** a statistical evaluation and/or a frequency analysis of the at least one monitored physical value (T, p, s).

6. A device for carrying out a method according to at least one of the preceding claims, **characterised by** an evaluation unit (18) that is integrated in a pneumatic suspension control device, a brake control device (20) or a wheel-slide protection control device (64) and designed for the constant or intermittent monitoring of at least one physical value (T, p, s), which is recorded in any event as part of the operation of the pneumatic suspension device (1) or a brake device of the vehicle and that varies in response to a failure or fault in the running gear (6) or bogie, in order to detect the failure or fault in the running gear (6) or bogie.

7. A device according to claim 6, **characterised in that** the evaluation unit (18) has at least one interface for communicating with a vehicle guidance system.

8. A device according to claim 6 or 7, **characterised in that** it comprises at least one path sensor (56, 58, 60, 62) for generating a path signal characterising the distance between the running gear (6) and a vehicle chassis (8) and/or at least one pressure sensor (46, 48; 52, 53, 54, 55) for generating a signal characterising the air bellows pressure (p) and/or a load-proportionate control pressure (T) for controlling braking force as a function of load in order to constantly or intermittently monitor the at least one physical value (T, p, s) of the air suspension device (1) that varies in response to a failure or critical condition in the running gear (6).

## Revendications

1. Procédé de détection de perturbations et de défauts de trains (6) de roulement ou de boggies de véhicules ferroviaires suspendus par des dispositifs (1) de suspension pneumatique, des soufflets (2) de suspension pneumatique du dispositif (1) de suspension pneumatique étant interposés entre le train (6) de roulement ou le boggie et une caisse (8), le procédé de détection de perturbations et de défauts dans les trains (6) de roulement ou dans les boggies comportant un contrôle permanent ou de temps à autre d'au moins une grandeur (T, p, s) physique détectée de toute façon dans le cadre du dispositif (1) de suspension pneumatique ou d'un dispositif de frein du véhicule et se modifiant par une perturbation ou par un défaut du train (6) de roulement ou du boggie.

2. Procédé suivant la revendication 1, **caractérisé en ce que** la au moins une grandeur physique comprend la pression (p) dans un soufflet (2 ; 26, 28, 30, 32) de suspension pneumatique et/ou une pression (T) de commande proportionnelle à la charge d'une régulation de force de freinage en fonction de la charge et/ou la distance (s) entre le train (6) de roulement et un châssis (8) du véhicule.

3. Procédé suivant la revendication 2, **caractérisé par** la formation d'une corrélation entre la pression (p) du soufflet de suspension pneumatique et/ou la pression (T) de commande proportionnelle à la charge d'une part et la distance (s) d'autre part.

4. Procédé suivant au moins l'une des revendications précédentes, **caractérisé en ce que** l'on effectue une évaluation sur le point de savoir si la au moins une grandeur (T, p, s) physique contrôlée est supérieure ou est inférieure à une valeur de seuil.

5. Procédé suivant au moins l'une des revendications précédentes, **caractérisé par** une exploitation statistique et/ou une analyse de fréquence de la au moins une grandeur (T, p, s) physique contrôlée.

6. Dispositif pour effectuer le procédé suivant au moins l'une des revendications précédentes, **caractérisé par** une unité (18) d'évaluation, intégrée dans un appareil de commande de suspension pneumatique, dans un appareil (20) de commande de freinage ou dans un appareil (64) de commande d'antidérapage, qui est constituée pour un contrôle permanent ou de temps à autre d'au moins une grandeur (T, p, s) physique détectée de toute façon dans le cadre du dispositif (1) de suspension pneumatique ou d'un dispositif de freinage du véhicule et se modifiant par une perturbation ou un défaut du train (6) de roulement ou du boggie, afin de détecter la perturbation ou le défaut du train (6) de roulement ou du boggie.

7. Dispositif suivant la revendication 6, **caractérisé en ce que** l'unité (18) d'exploitation a au moins une interface de communication avec un système de conduite de véhicule.

8. Dispositif suivant l'une des revendications 6 ou 7, **caractérisé en ce qu'**il comporte, pour le contrôle permanent ou de temps à autre de la au moins une grandeur (T, p, s) physique, se modifiant par une perturbation ou un état critique du train (6) de roulement, du dispositif (1) de suspension pneumatique, au moins un capteur (56, 58, 60, 62) de déplacement pour détecter un signal de déplacement caractérisant la distance entre le train (6) de roulement et un châssis (8) du véhicule et/ou au moins un capteur (46, 48 ; 52, 53, 54, 55) de pression pour produire un signal caractérisant la pression (p) de soufflet de suspension pneumatique et/ou une pression (T) de commande, proportionnelle à la charge, d'une régulation de la force de freinage en fonction de la charge.
